# FASCICULE DE BREVET EUROPEEN

(11) **EP 2 107 752 B1**
(45) Date de publication et mention de la délivrance du brevet: **03.07.2013**
(21) Numéro de dépôt: 09155742.1
(22) Date de dépôt: 20.03.2009
(51) Int. Cl.: H04L 29/06

(54) **Serveur d'applications permettant à un appel destiné à un terminal connecté à une passerelle, d'être étendu vers tous les terminaux connectés à cette passerelle**
Anwendungsserver, der es ermöglicht, dass ein Aufruf an ein mit einer Schnittstelle verbundenes Endgerät auf alle mit dieser Schnittstelle verbundenen Endgeräte ausgedehnt wird
Application server for extending a call intended for one terminal connected to a gateway to all the terminals connected to this gateway

(30) Priorité: 04.04.2008 FR 0852261
(43) Date de publication de la demande: 07.10.2009
(73) Titulaire: Alcatel Lucent, 75007 Paris (FR)
(72) Inventeur: MAAG, Maria Laura, 91620, NOZAY (FR); DAIGREMONT, Johann, 91620, NOZAY (FR)
(74) Mandataire: Sciaux, Edmond

(56) Documents cités:
- WO-A-01/31900
- US-A1- 2006 198 334
- US-B1- 6 981 263
- NN: "Overview of Cisco VoIP Infrastructure Solution for SIP" 29 mai 2004 (2004-05-29), , XP002509790 Extrait de l'Internet: URL:www.electronics.dit.ie/staff/srooney/O utput/Overview%20of%20Cisco%20VoIP%20Infra structure%20Solution%20for%20SIP.pdf> [extrait le 2009-01-09] * le document en entier *

## Description

L'invention concerne un serveur d'applications pour un réseau de télécommunication supportant le protocole de signalisation SIP (Session Initiation protocol) et offrant une combinaison d'au moins trois services : téléphonie classique sur protocole Internet, téléphonie mobile sur protocole Internet, et accès à Internet. La télévision, peut en outre être proposée mais elle n'est pas concernée par la présente invention. Pour bénéficier de cette combinaison de services, un usager a, dans son logement, une passerelle résidentielle reliée à un réseau de télécommunication classique par une ligne ADSL (Assymetrical Digital Subscriber Line) ou un câble de distribution de télévision, supportant le protocole Internet. Dans ce logement, cette passerelle peut être reliée à :
- un (ou plusieurs) téléphone classique (c'est à dire prévu pour être raccordé à une interface analogique) par une liaison filaire, ce téléphone classique pouvant être filaire ou sans fil, de type DECT (Digital Enhanced Cordless Telephone) par exemple,
- un (ou plusieurs) téléphone mobile WiFi, c'est à dire relié par une liaison WiFi à un point d'accès WiFi relié ou intégré à la passerelle résidentielle,
- un ordinateur personnel exécutant notamment un logiciel de téléphonie, par une liaison filaire ou WiFi,
- éventuellement un téléviseur, par une liaison filaire ou WiFi.

L'ordinateur personnel et le téléphone mobile WiFi émettent et reçoivent des signaux téléphoniques sous la forme de paquets de données conformes à la famille de protocoles Internet. La passerelle résidentielle convertit un signal analogique fourni par le téléphone classique en paquets de données conformes à la famille de protocoles Internet, puis les envoie au réseau ; et réciproquement elle reçoit de tels paquets émis par le réseau et les convertit en un signal analogique acceptable par le téléphone classique.

L'invention concerne plus particulièrement le cas où un usager est à son domicile et peut donc utiliser un téléphone mobile WiFi. Ce téléphone mobile peut aussi être un téléphone bimode, cellulaire-WiFi, utilisé dans le mode WiFi. Dans ce qui suit, on désignera par téléphone mobile WiFi, aussi bien un téléphone WiFi qu'un téléphone bimode WiFi-cellulaire. On désignera par téléphone classique tout téléphone pouvant être raccordé à une interface analogique de la passerelle résidentielle, par une liaison filaire ou sans fil. L'invention est applicable aussi à tout autre type de téléphone mobile connectable à une passerelle résidentielle via un réseau local sans fil, par exemple un téléphone de type Bluetooth.

Quand un usager est abonné à cette combinaison d'au moins trois services, il peut être appelé sur le téléphone classique en composant un numéro propre à ce téléphone classique, et appartenant au plan de numérotation du réseau classique. Si cet usager possède un téléphone mobile WiFi, il peut être appelé sur ce téléphone mobile WiFi en composant un numéro propre à ce téléphone mobile WiFi, et appartenant aussi au plan de numérotation du réseau classique. Dans le premier cas, le téléphone classique est le seul qui sonne et qui permette de prendre l'appel. Dans le second cas, le téléphone WiFi est le seul qui sonne et qui permette de prendre l'appel.

Lorsqu'un logement est habité par plusieurs personnes bénéficiant de cette combinaison de services, chaque personne peut disposer d'un téléphone mobile WiFi, en propre. Une même passerelle résidentielle peut supporter, au départ et à l'arrivée, plusieurs communications simultanément, respectivement sur plusieurs téléphones mobiles WiFi, chacun de ces téléphones mobiles WiFi disposant d'un numéro individuel appartenant au plan de numérotation du réseau classique. Le téléphone classique de ce même logement dispose aussi d'un numéro individuel qui lui est propre, et donc distinct du numéro du téléphone mobile WiFi ou des numéros des téléphones mobiles WiFi connectables à la même passerelle. Il peut même y avoir plusieurs téléphones classiques reliés à une même passerelle résidentielle, et ayant soit un même numéro, soit des numéros distincts permettant des appels indépendants.

Considérons le cas simple où il y a un seul téléphone classique et un seul téléphone mobile WiFi, reliés à une même passerelle résidentielle. Quand quelqu'un veut appeler un usager résidant dans ce logement, il doit choisir entre appeler le numéro du téléphone classique ou appeler le numéro du téléphone mobile WiFi de cet usager. Dans le premier cas, seul le téléphone classique sonne. Dans le second cas, seul le téléphone mobile WiFi de l'usager sonne ; donc aucun autre usager ne peut répondre à sa place, même dans les cas où cela est souhaitable.

Un procédé connu pour remédier à cet inconvénient consiste à demander, à partir du terminal demandeur, l'établissement d'un double appel pour faire sonner simultanément le téléphone mobile WiFi et le téléphone classique, mais ce procédé n'est pas pratique car il nécessite que la personne appelante fasse des manipulations supplémentaires. De plus l'appelant ne peut pas savoir quel téléphone mobile WiFi est présent dans ce logement.

L'article **"**Overview of Cisco VolP Infrastructure Solution for SIP" 29 mai 2004, XP002509790, [extrait le 2009-01-09] décrit un serveur d'applications pour un réseau de télécommunication supportant le protocole SIP, qui comporte:
- des moyens pour recevoir une requête d'établissement d'appel vers un numéro identifiant une passerelle,
- des moyens pour interroger alors un autre équipement en lui envoyant le numéro identifiant cette passerelle et pour recevoir un numéro de terminal,
- des moyens pour demander à un équipement de contrôle d'appel l'établissement d'un appel vers au moins un téléphone identifié par un numéro ainsi reçu.

Le document US 2006/1198334 décrit un système permettant d'établir un appel entre un client SIP et un autre client connecté à un réseau mobile, de telle manière que le client se comporte comme un client mobile d'un opérateur mobile, avec toutes fonctions d'un téléphone cellulaire.

Le document WO 0131900 décrit un téléphone qui comporte des moyens permettant à un usager de rediriger systématiquement les appels vers un autre téléphone.

Un premier but de l'invention est de permettre de faire sonner au moins un téléphone mobile WiFi localisé dans ce logement quand un appelant compose le numéro d'annuaire du téléphone classique de ce logement.

Un second but de l'invention est de faire sonner simultanément au moins un téléphone classique et un téléphone mobile WiFi localisé ce logement quand un appelant compose le numéro d'annuaire de ce téléphone classique.

Un troisième but de l'invention est de permettre à l'usager appelé de choisir entre diverses options :
- faire sonner seulement le téléphone fixe de cet usager, connecté à la passerelle,
- faire sonner seulement le téléphone WiFi de cet usager, connecté à la passerelle,
- ou faire sonner simultanément le téléphone classique (ou les téléphones classiques) et le téléphone mobile WiFi de cet usager, connectés à la passerelle,
- ou faire sonner simultanément au moins un téléphone classique et tous les téléphones mobiles WiFi qui sont connectés à la passerelle, quand un appelant compose le numéro d'annuaire du téléphone classique.

Un premier objet de l'invention est un serveur d'applications pour un réseau de télécommunication supportant le protocole SIP, comportant :
- des moyens pour recevoir une requête d'établissement d'appel vers un numéro identifiant un terminal susceptible d'être connecté à une passerelle résidentielle,
- des moyens pour sélectionner au moins un numéro parmi une pluralité de numéros désignant respectivement des téléphones connectés à cette passerelle résidentielle,
- et des moyens pour demander à un équipement de contrôle d'appel l'établissement d'au moins un appel vers au moins un numéro sélectionné parmi cette pluralité de numéros désignant respectivement des téléphones connectés à cette passerelle résidentielle ;
caractérisé en ce qu'il comporte en outre des moyens pour interroger un autre équipement lors d'une requête d'établissement d'appel vers un numéro identifiant ladite passerelle résidentielle, en lui envoyant le numéro identifiant cette passerelle, et des moyens pour recevoir de cet autre équipement une pluralité de numéros désignant respectivement des téléphones connectés à cette passerelle résidentielle.

Selon un premier mode de réalisation, les moyens pour sélectionner sélectionnent toujours tous les numéros désignant respectivement des téléphones connectés à cette passerelle.

Selon un mode de réalisation préféré, il comporte en outre des moyens pour permettre à un usager de configurer ce serveur de manière à sélectionner à l'avance un ou plusieurs de téléphones parmi les téléphones connectés à ladite passerelle.

Le serveur d'applications ainsi caractérisé permet de faire sonner au moins un téléphone sélectionné parmi une pluralité de téléphones situés dans un même local. Par exemple, il peut faire sonner un téléphone mobile WiFi quand quelqu'un appelle sur le numéro correspondant à un téléphone classique, parce que le numéro du téléphone mobile WiFi peut être retrouvé à partir du numéro du téléphone classique, grâce aux moyens pour interroger un autre équipement, en lui envoyant un numéro identifiant la passerelle, et aux moyens pour recevoir de cet autre équipement au moins un numéro désignant un téléphone connecté à cette passerelle résidentielle.

Le serveur ainsi caractérisé permet aussi de faire sonner à la fois un téléphone mobile WiFi et un téléphone classique, en composant seulement le numéro correspondant au téléphone classique, parce que le numéro du téléphone mobile WiFi peut être retrouvé et localisé à partir du numéro du téléphone classique, grâce aux moyens pour interroger un autre équipement, en lui envoyant le numéro identifiant cette passerelle, et aux moyens pour recevoir de cet autre équipement au moins un numéro désignant un téléphone connecté à cette passerelle résidentielle. L'usager appelé peut prendre l'appel sur le téléphone classique ou sur son téléphone mobile WiFi.

Le fait que le téléphone classique et le téléphone mobile WiFi sonnent en même temps est parfois gênant. Par exemple, à certains moments, un usager préférerait recevoir discrètement des appels, sur son téléphone WiFi seulement, pour éviter que le bruit de la sonnerie du téléphone classique (ou des téléphones classiques) gêne d'autres personnes présentes dans la maison.

Les moyens pour sélectionner un numéro parmi plusieurs permettent à un usager de configurer ce serveur, à tout moment, de manière que ce serveur demande :
- soit l'établissement d'une pluralité d'appels respectivement vers tous les téléphones identifiés par les numéros ainsi reçus,
- soit l'établissement d'un appel seulement vers un téléphone mobile prédéterminé, identifié par un numéro ainsi reçu,
- soit l'établissement d'un appel seulement vers un téléphone classique, prédéterminé, identifié par un numéro ainsi reçu.

L'invention a aussi pour objet un serveur de localisation de terminaux connectés à une passerelle résidentielle, pour un réseau de télécommunication supportant le protocole SIP, comportant des moyens pour recevoir un identifiant envoyé par un autre équipement, et des moyens pour déterminer alors au moins une adresse de terminal ;
caractérisé en ce que lesdits moyens pour recevoir un identifiant sont aptes à recevoir une adresse de passerelle résidentielle ;
et en ce que lesdits moyens pour déterminer alors au moins une adresse de terminal comportent :
- des moyens pour mémoriser et associer :
   -- un identifiant de passerelle,
   -- et une pluralité de numéros identifiant respectivement une pluralité de téléphones connectés à cette passerelle,
- et des moyens pour envoyer à cet autre équipement une pluralité de numéros identifiant des téléphones connectés à la passerelle identifiée par cet identifiant de passerelle résidentielle, ces numéros étant lus dans les moyens pour mémoriser et associer.

L'invention sera mieux comprise et d'autres caractéristiques apparaîtront à l'aide de la description ci-dessous et des figures l'accompagnant :
- La figure 1 représente schématiquement les équipements d'abonné dans un logement équipé d'une passerelle résidentielle reliée, via un réseau public classique, à un autre réseau public de type SIP et comportant un exemple de réalisation du serveur d'applications, selon l'invention, et un exemple de réalisation du serveur de localisation de terminaux connectés à une passerelle résidentielle, selon l'invention.
- La figure 2 représente schématiquement un réseau de télécommunication de type SIP (Session Initiation Protocol), sans être de type IMS (Internet Protocol Multimedia Subsystem).
- La figure 3 représente schématiquement un réseau de télécommunication de type SIP et plus particulièrement de type IMS.
- La figure 4 représente un diagramme temporel des échanges de signaux de signalisation pendant le fonctionnement d'un exemple de réalisation du serveur d'applications et du serveur de localisation des terminaux connectés à une passerelle résidentielle selon l'invention.

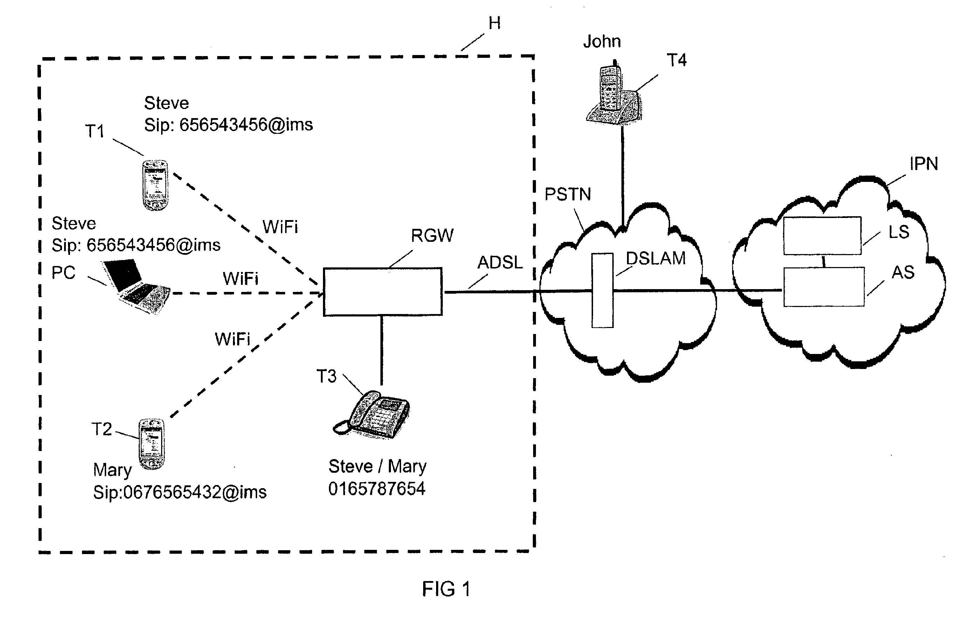

Dans l'exemple représenté sur la **figure 1****,** un logement H est relié à un réseau public classique PSTN par une passerelle résidentielle RGW et une ligne d'abonné numérique asymétrique, référencée ADSL sur les figures. Le réseau classique PSTN comporte un multiplexeur-démultiplexeur d'accès pour lignes numériques d'abonné asymétriques, référencé DSLAM, qui permet à des passerelles résidentielles telles que la passerelle RGW d'accéder à un autre réseau public IPN supportant le protocole Internet et le protocole SIP. Ce réseau IPN comporte un exemple de réalisation AS du serveur d'applications, selon l'invention, et un exemple de réalisation LS du serveur de localisation de terminaux connectés à une passerelle résidentielle, selon l'invention.

Le logement H comporte les équipements d'abonné suivants qui sont reliés à la passerelle RGW :
- un téléphone mobile T1 bimode cellulaire-WiFi, appartenant à Steve, ayant pour numéro 0656543456 dans un réseau cellulaire global et ayant pour numéro sip: 0656543456@ims dans le réseau IPN ;
- un téléphone mobile T2 bimode cellulaire-WiFi, appartenant à Mary, ayant pour numéro 0676565432 dans le réseau cellulaire global et ayant pour numéro sip: 0676565432@ims dans le réseau IPN ;
- et un téléphone filaire classique analogique, T3, utilisable par Steve et Mary, et ayant pour numéro 0165787654 dans le réseau public classique PSTN.

La passerelle résidentielle RGW comporte une interface analogique pour le téléphone classique T3, et un point d'accès WiFi auquel peuvent se connecter plusieurs terminaux mobiles WiFi. Elle est reliée au téléphone classique T3 par un fil ; et aux téléphones cellulaires WiFi, T1, T2, et à l'ordinateur PC, par des liaisons WiFi.

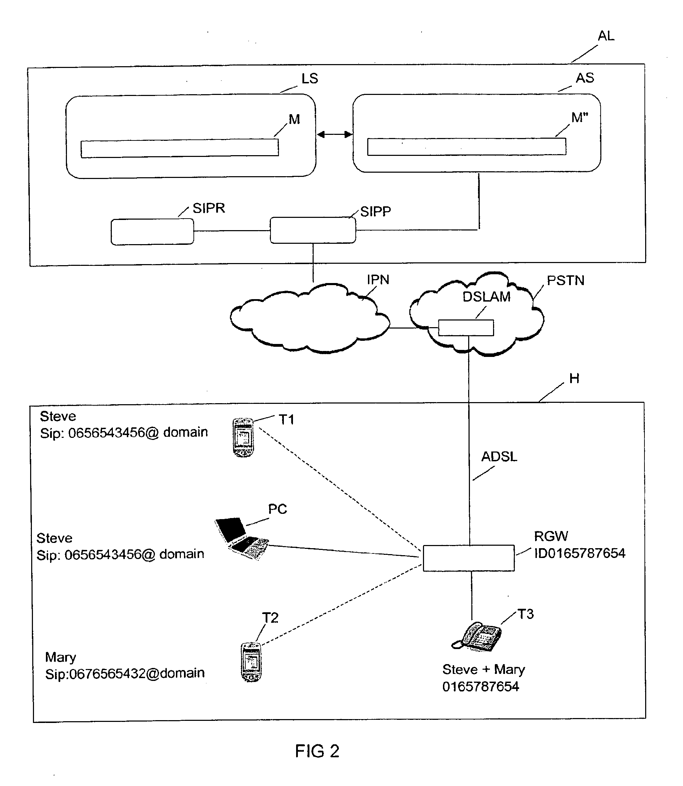

Considérons un usager, John, qui possède un téléphone quelconque T4 relié au réseau public classique PSTN. Avec son téléphone T4, John appelle Steve, par exemple, en composant le numéro 0165787654 du téléphone classique T3, dans le plan de numérotation du réseau classique PSTN. Les figures 2 à 4 illustrent comment un appel est établi, en faisant sonner à la fois le téléphone mobile WiFi T1 de Steve, le téléphone mobile WiFi T2 de Mary, et le téléphone classique T3, si Steve a choisi cette option.

La **figure 2** représente schématiquement un réseau de télécommunication de type SIP (Session Initiation Protocol), sans être de type IMS (Internet Protocol Multimedia Subsystem). Il comporte une couche Fournisseurs de Services, SP, comportant essentiellement un serveur d'enregistrement SIPR (appelé aussi SIP Registrar en anglais), un serveur mandataire SIPP (appelé SIP proxy server en anglais), un serveur d'applications de téléphonie AS, et un serveur de localisation LS. Le serveur d'enregistrement SIPR et le serveur mandataire SIPP sont réalisés de manière classique.

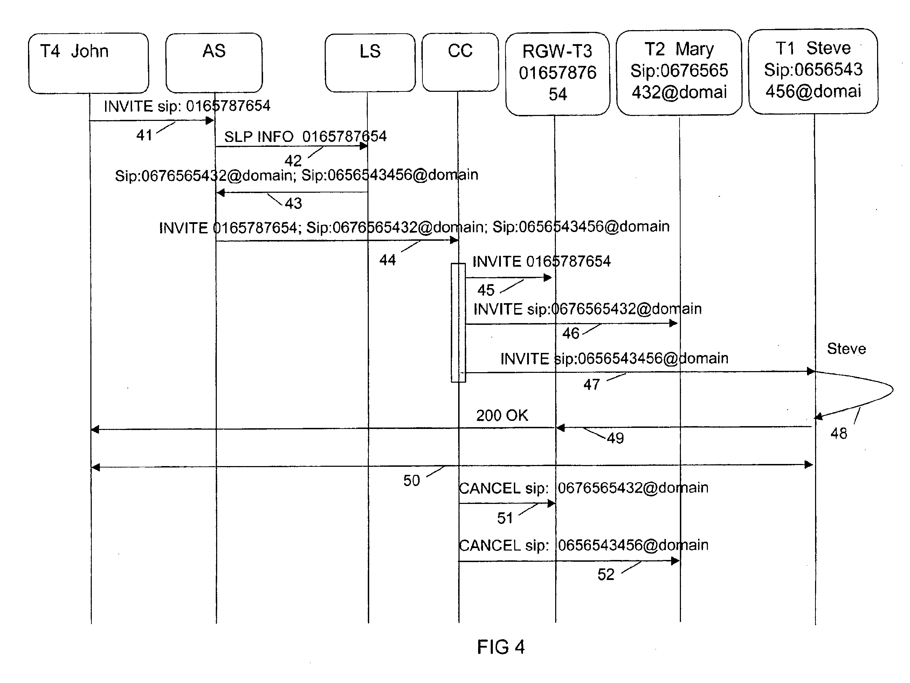

Le serveur d'applications AS est un exemple de réalisation du serveur d'applications selon l'invention, qui comporte des moyens logiciels pour demander au serveur de localisation LS quels sont les téléphones WiFi qui sont actuellement connectés à une passerelle résidentielle donnée, au moment où un appel doit être établi via cette passerelle résidentielle ; puis demander à un équipement de contrôle d'appels d'établir des appels. Ces fonctions seront décrites plus loin en se référant à la figure 4. Le serveur d'application AS comporte une mémoire M" contenant l'identifiant de la passerelle, le numéro identifiant le téléphone classique associé à la passerelle et les identifiants des téléphones mobiles WiFi des utilisateurs qui sont associés à la passerelle et susceptibles d'y être connectés lorsqu'ils sont à la maison :

| Passerelle | Téléphone Classique | Téléphones WiFi associés à la passerelle, et susceptibles d'y être connectés |
|---|---|---|
| ID0165787654 | 0165787654 | Sip: 0676565432@ims; |
| | | Sip: 0656543456@ims; |
| | | Sip: 0635453425@ims |

Cette mémoire a pour but de stocker également les différentes options d'appel configurées par l'usager.

Le serveur de localisation LS est un exemple de réalisation du serveur de localisation selon l'invention, qui comporte :
- une mémoire M pour mémoriser et associer :
   -- un identifiant de passerelle résidentielle, par exemple ID0165787654 pour la passerelle RGW,
   -- et au moins un numéro identifiant un téléphone mobile, tel que le téléphone mobile WiFi, T1 ou l'ordinateur PC équipé d'un logiciel de téléphonie sur protocole Internet, relié à un moment donné à une interface radio de cette passerelle résidentielle ;
- des moyens pour recevoir, d'un serveur d'applications, tel que le serveur AS, une requête contenant un identifiant de passerelle résidentielle,
- et des moyens pour envoyer dans ce cas à ce serveur d'applications un ou plusieurs numéros identifiant un ou plusieurs téléphones mobiles connectés à la passerelle résidentielle, si c'est le cas.

Par exemple, la mémoire M du serveur de localisation LS mémorise et associe les numéros suivants, pour l'exemple illustré sur la figure 1 :

| Passerelle | Téléphones WiFi connectés à la passerelle à un instant donné |
|---|---|
| ID0165787654 | Sip: 0676565432@ims; |
| | Sip: 0656543456@ims |

Dans d'autres exemples de réalisation, on peut utiliser le numéro du poste téléphonique classique comme identifiant de passerelle.

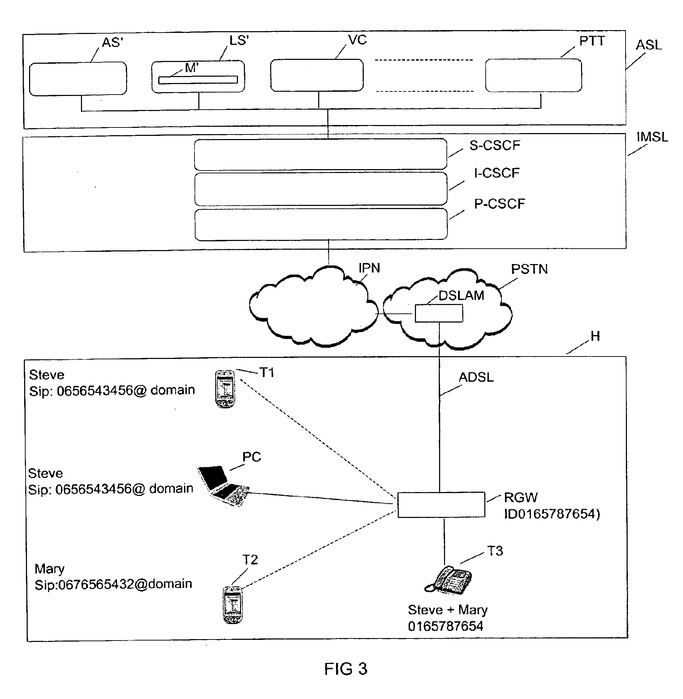

La **figure 3** représente schématiquement un réseau de télécommunication de type SIP et plus particulièrement de type IMS. Il comporte une couche IMS classique, référencée IMSL, qui comporte essentiellement :
- une fonction mandataire classique P-CSCF qui est le premier point de contact d'un terminal avec la couche IMSL,
- une fonction d'interrogation classique I-CSCF qui intervient pour authentifier et localiser un abonné,
- une fonction de service classique S-CSCF qui gère notamment l'enregistrement des abonnés présents dans le réseau.

Ce réseau comporte en outre une couche de serveurs d'applications, ASL, qui comporte par exemple : un serveur AS' d'applications de téléphonie, un serveur de localisation LS', un serveur d'applications video VC, ..., un serveur d'applications « Appuyez pour Parler » PTT (Push to Talk en anglais).

Le serveur d'applications de téléphonie AS' joue un rôle analogue à celui du serveur d'applications AS du réseau décrit en se référant à la figure 2. Le serveur de localisation LS' joue un rôle analogue à celui du serveur de localisation LS' du réseau décrit en se référant à la figure 2. Il comporte une mémoire M' analogue à la mémoire M.

La **figure 4** représente un diagramme temporel des échanges de signaux de signalisation pendant le fonctionnement d'un exemple de réalisation du serveur d'applications et du serveur de localisation selon l'invention. Plus précisément, il représente un exemple où Steve a choisi l'option consistant à faire sonner à la fois le téléphone mobile WiFi T1 de Steve, le téléphone mobile WiFi T2 de Mary, et le téléphone classique T3, en configurant le serveur d'applications de manière appropriée.

Le réseau considéré est un réseau supportant le protocole de signalisation SIP et le protocole Internet, et qui peut être l'exemple représenté sur la figure 2 (Pas de type IMS) ou l'exemple représenté sur la figure 3 (De type IMS). Dans cet exemple le serveur d'applications AS (respectivement AS') est configuré pour faire sonner à la fois le téléphone classique T3, le téléphone mobile WiFi T2 de Mary, et le téléphone mobile WiFi T1 de Steve.

Etape 41 : John veut téléphoner chez Mary et Steve. Il compose le numéro 0165787654 qui est le numéro identifiant à la fois le téléphone classique T3 et la passerelle résidentielle du logement de Mary et Steve, ce numéro appartenant au plan de numérotation du réseau téléphonique. Un message de signalisation INVITE sip: 0165787654, classique, est acheminé jusqu'au serveur d'applications AS.

Etape 42 : Le serveur d'applications AS envoie alors une requête SLP INFO 0165787654 au serveur de localisation LS. Un champ libre de cette requête SIP est utilisé pour demander quels sont les terminaux mobiles WiFi actuellement connectés à l'interface WiFi de la passerelle résidentielle RWG, celle-ci étant identifiée par le numéro d'annuaire 0165787654 contenu dans cette requête. Dans cet exemple, le téléphone WiFi T1 de Steve et le téléphone WiFi T2 de Mary sont connectés à la passerelle RGW. L'ordinateur PC de Steve n'est pas connecté.

Etape 43 : Le serveur de localisation LS répond au serveur d'applications AS par un message SIP classique 200 OK qui contient, pour la mise en oeuvre de l'invention, deux identifiants uniformes de ressource (Uniform resource Identifier en anglais, c'est une sorte de numéro de téléphone, qui est compatible avec le protocole SIP). Un identifiant sip: 0676565432@domain désigne le téléphone WiFi T1 de Steve et un autre identifiant sip: 0656543456@domain désigne le téléphone WiFi T2 de Mary.

Etape 44 : Le serveur d'applications AS après vérification des téléphones WiFi associés à la résidence de Mary et Steve dans la mémoire M" ainsi que des différents options configurées, envoie alors une requête :
INVITE 0165787654; sip: 0676565432@domain ; sip: 0656543456@domain, adressée à un équipement CC (non représenté sur les autre figures) qui réalise le contrôle d'appel, dans le réseau IPN, pour demander l'établissement de trois appels respectivement vers le téléphone classique T3, le téléphone mobile T2, et le téléphone mobile T1.

Etapes 45, 46, 47 : L'équipement de contrôle d'appel, CC, envoie alors en parallèle trois requêtes de demande d'établissement d'appel,

INVITE 0165787654, destinée la passerelle résidentielle RGW qui sert d'interface pour le téléphone classique T3,
INVITE sip: 0656543456@domain, destinée au téléphone WiFi T2,
INVITE sip: 0676565432@domain, destinée au téléphone WiFi T1.

Etape 48 : Tous les téléphones sonnent ensemble : Le téléphone classique T3, le téléphone WiFi T2 de Mary ; et le téléphone WiFi T1 de Steve. Mary ne répond pas. C'est Steve qui répond, en prenant l'appel sur son téléphone WiFi T1. Des messages SIP classiques indiquent, en retour, que les terminaux sonnent, mais ils ne sont pas représentés sur la figure pour alléger le diagramme.

Etape 49 : Le téléphone WiFi T1 de Steve envoie à l'équipement CC de contrôle d'appel un message 200-OK indiquant que le téléphone WiFi T1 de Steve prend l'appel. Un message SIP classique indique en retour que le téléphone T4 de John a bien reçu ce message, mais il n'est pas représenté.

Etape 50 : L'appel est effectivement établi entre le téléphone T4 de John et le téléphone WiFi T1 de Steve.

Etapes 51, 52 : Comme il est inutile de continuer à faire sonner le téléphone WiFi T2 de Mary et le téléphone classique T3, l'équipement de contrôle d'appel, CC, envoie alors en parallèle deux requêtes de demande d'annulation d'appel,
CANCEL 0165787654, destinée la passerelle résidentielle RGW qui sert d'interface pour le téléphone classique T3,

CANCEL sip: 0656543456@domain, destinée au téléphone T2 de Mary.

Dans un autre exemple de configuration, le serveur d'applications AS est configuré par un usager pour faire sonner tous les téléphones mobiles qui sont connectés, mais ne pas faire sonner le téléphone classique. Ce serveur AS envoie, au cours de l'étape 44, une requête :
INVITE sip: 0676565432@domain ; sip: 0656543456@domain,
adressée à l'équipement CC qui réalise le contrôle d'appel, pour demander l'établissement de seulement deux appels respectivement vers le téléphone mobile T2, et le téléphone mobile T1. Ainsi il ne fait sonner que les téléphones WiFi.

Dans un autre exemple de configuration, le serveur d'applications AS est configuré par un usager pour faire sonner seulement le téléphone mobile T1 de Steve. Le serveur d'applications AS envoie, au cours de l'étape 44, une requête :
INVITE sip: 0656543456@domain,
adressée à l'équipement CC qui réalise le contrôle d'appel, pour demander l'établissement de seulement un appel vers le téléphone mobile T1 de Steve.

Pour permettre de programmer ces différentes configurations, le serveur d'applications comporte des moyens permettant à un usager de sélectionner un des trois modes de fonctionnement décrits ci-dessus. Par exemple, Mary peut accéder à un site web dédié, en utilisant un navigateur classique, et choisir alors l'une des trois options suivantes :
- Soit faire sonner seulement son téléphone WiFi T2,
- Soit faire sonner seulement les deux téléphones mobiles WiFi, T1 et T2,
- Soit faire sonner le téléphone classique T3 et les deux téléphones mobiles WiFi, T1 et T2,
   quand quelqu'un appelle sur le numéro 0656543456 désignant la passerelle et le téléphone classique T3 dans le plan de numérotation du réseau classique PSTN.

Dans un exemple de réalisation, le serveur de localisation LS comporte :
- Des moyens logiciels pour souscrire aux notifications de présence d'un serveur de présence classique (non représenté). Ce serveur de présence reçoit les informations de présence contenant les identifiants des passerelles auxquelles les différents terminaux SIP de l'opérateur sont connectés. De ce fait, le serveur de localisation LS détermine à chaque instant quels sont les téléphones WiFi connectés à la passerelle résidentielle RGW. Ce serveur de localisation LS peut éventuellement être hébergé sur la machine hébergeant ce serveur de présence ou sur la machine hébergeant le serveur d'application AS.
- Des moyens logiciels pour mémoriser et associer :
   -- un identifiant ID0165787654 identifiant la passerelle résidentielle RGW,
   -- et un numéro pour chaque téléphone mobile T1, T2 connecté, à l'instant considéré, à une interface radio de cette passerelle résidentielle.
- Des moyens logiciels pour recevoir du serveur d'applications AS une requête contenant l'identifiant de la passerelle résidentielle RGW considérée.
- Des moyens pour envoyer dans ce cas au serveur d'applications AS un numéro pour chaque téléphone mobile connecté, à l'instant considéré, à la passerelle identifiée par l'identifiant de passerelle résidentielle, ce numéro étant lu dans les moyens pour mémoriser.

Dans un autre exemple de réalisation, si le serveur de présence le permet, le serveur d'application AS peut interroger (typiquement en utilisant le protocole HTTP) directement ce serveur de présence afin de déterminer quels sont les terminaux connectés à la passerelle RGW. Lorsque le message INVITE est intercepté par le serveur AS, ce dernier interroge le serveur de présence, pour chaque identifiant de terminal, associé à la passerelle RGW dans la mémoire M", en utilisant par exemple le protocole HTTP. Le serveur de présence lui répond avec un document de présence pour chaque identifiant de terminal. Le serveur AS détermine ensuite à partir des documents de présence obtenus, si le terminal correspondant à l'identifiant est connecté ou non à la passerelle RGW.

L'invention est applicable à des passerelles autres que résidentielles, par exemple des passerelles utilisées par des entreprises. Elle est applicable à des téléphones fixes aussi bien qu'à des téléphones mobiles, dés lors qu'ils sont reliés à une passerelle d'accés à un réseau supportant le protocole SIP.

## Revendications

1. Serveur d'applications (AS) pour un réseau de télécommunication (IPN) supportant le protocole SIP, comportant :
- des moyens pour recevoir (41) une requête d'établissement d'appel vers un numéro identifiant un terminal (T1) susceptible d'être connecté à une passerette résidentielle (RGW),
- des moyens pour sélectionner au moins un numéro parmi une pluralité de numéros désignant respectivement des téléphones (T1, T2, T3) connectés à cette passerelle résidentielle,
- et des moyens pour demander (44) à un équipement de contrôle d'appel (CC) l'établissement d'au moins un appel vers au moins un numéro sélectionné parmi cette pluralité de numéros désignant respectivement des téléphones (T1, T2, T3) connectés à cette passerelle résidentielle,
**caractérisé en ce que** le serveur d'applications (AS) comporte en outre des moyens pour interroger (42) un serveur de localisation (LS) lors d'une requête d'établissement d'appel vers un numéro identifiant ladite passerelle résidentielle (RGW), en lui envoyant le numéro identifiant cette passerelle, et des moyens pour recevoir (43), par le serveur de localisation (LS), une pluralité de numéros désignant respectivement des téléphones connectés à la passerelle résidentielle.

2. Serveur d'applications (AS) selon la revendication 1, **caractérisé en ce qu'**il comporte en outre des moyens pour permettre à un usager de configurer ce serveur d'applications (AS) de manière à sélectionner à l'avance au moins un numéro parmi une pluralité de numéros désignant respectivement des téléphones (T1, T2, T3) connectés à cette passerelle résidentielle.

3. Serveur (LS) de localisation de terminaux connectés à une passerelle résidentielle (RSW), pour un réseau de télécommunication supportant le protocole SIP, comportant des moyens pour recevoir un identifiant envoyé par un serveur d'application (AS), et des moyens pour déterminer alors au moins une adresse de terminal (T1),
**caractérisé en ce que** lesdites moyens pour recevoir un identifiant sont aptes à recevoir une adresse de passerelle résidentielle (RSW).
et **en ce que** lesdits moyens pour déterminer alors au moins une adresse de terminal (T1) comportent :
- des moyens pour mémoriser et associer :
-- un identifiant de passerelle (RGW),
-- et une pluralité de numéros identifiant respectivement des téléphones (T1, T2, T3) connectés à cette passerelle,
- et des moyens pour envoyer (43) à cet autre équipement (AS) une pluralité de numéros désignant respectivement des télephones (T1, T2, T3) connectés à cette passerelle résidentielle (RGW), ces numéros étant lus dans les moyens pour mémoriser et associer.

## Patentansprüche

1. Anwendungsserver (AS) für ein Telekommunikationsnetzwerk (IPN), welches das SIP-Protokoll unterstützt, umfassend:
- Mittel zum Empfangen (41) einer Aufforderung für den Aufbau einer Anrufverbindung zu einer Nummer, welche ein Endgerät (T1), das an ein Heim-Gateway (RGW) angeschlossen werden kann, identifiziert,
- Mittel zum Auswählen mindestens einer Nummer unter einer Vielzahl von Nummern, welche jeweils an dieses Heim-Gateway angeschlossene Telefongeräte (T1, T2, T3) bezeichnen,
- und Mittel zum Auffordern (44) einer Anrufsteuerungseinrichtung (CC), mindestens eine Anrufverbindung zu mindestens einer unter dieser Vielzahl von Nummern, welche jeweils an dieses Heim-Gateway angeschlossene Telefongeräte (T1, T2, T3) bezeichnen, ausgewählten Nummer aufzubauen,
**dadurch gekennzeichnet, dass** der Anwendungsserver (AS) weiterhin Mittel zum Abfragen (42) eines Ortungsservers (LS) im Fall einer Aufforderung für den Aufbau einer Anrufverbindung zu einer Nummer, welche das besagte Heim-Gateway (RGW) identifiziert, indem er ihm die Nummer, welche dieses Gateway identifiziert, sendet, sowie Mittel zum Empfangen (43), an dem Ortungsserver (LS), einer Vielzahl von Nummern, welche jeweils an das Heim-Gateway angeschlossene Telefongeräte bezeichnen, umfasst.

2. Anwendungsserver (AS) nach Anspruch 1, **dadurch gekennzeichnet, dass** er Mittel umfasst, die es einem Nutzer ermöglichen, diesen Anwendungsserver (AS) zu konfigurieren, um im Voraus mindestens eine Nummer unter einer Vielzahl von Nummern, welche jeweils an dieses Heim-Gateway angeschlossene Telefongeräte (T1, T2, T3) bezeichnen, auszuwählen.

3. Server (LS) zur Ortung von Endgeräten, welche an ein Heim-Gateway (RGW) angeschlossen sind, für ein das SIP-Protokoll unterstützendes Telekommunikationsnetzwerk, umfassend Mittel zum Empfangen einer von einem Anwendungsserver (AS) gesendeten Kennung, sowie Mittel zum anschließenden Bestimmen mindestens einer Adresse eines Endgeräts (T1),
**dadurch gekennzeichnet, dass** die besagten Mittel zum Empfangen einer Kennung für den Empfang einer Adresse eines Heim-Gateways (RGW) ausgelegt sind,
und dass die besagten Mittel zum anschließenden Bestimmen mindestens einer Adresse eines Endgeräts (T1) umfassen:
- Mittel zum Speichern und Assoziieren
-- einer Gateway-Kennung (RGW),
-- und einer Vielzahl von Nummern, welche jeweils an dieses Gateway angeschlossene Telefongeräte (T1, T2, T3) identifizieren,
- und Mittel zum Senden (43) einer Vielzahl von Nummern, welche jeweils an dieses Heim-Gateway (RGW) angeschlossene Telefongeräte (T1, T2, T3) bezeichnen, an diese andere Einrichtung (AS), wobei diese Nummern in Mitteln zum Speichern und Assoziieren gelesen werden.

## Claims

1. Application server (AS) for a telecommunication network (IPN) supporting the SIP protocol, comprising:
- means for receiving (41) a request to set up a call to a number identifying a terminal (T1) likely to be connected to a residential gateway (RGW),
- means for selecting at least one number from among a plurality of numbers respectively designating telephones (T1, T2, T3) connected to this residential gateway,
- and means for requesting (44) that a call control device (CC) set up at least one call to at least one number selected from among this plurality of numbers respectively designating telephones (T1, T2, T3) connected to this residential gateway,
**characterized in that** the application server (AS) also comprises means of interrogating (42) a location server (LS) during a request to set up a call to a number identifying said residential gateway (RGW), sending it the number identifying this gateway, and means for receiving (43), by the location server (LS), a plurality of numbers respectively designating telephones connected to the residential gateway.

2. Application server (AS) according to claim 1, **characterized in that** it also comprises means to allow a user to configure this application server (AS) in such a way as to select in advance at least one number from among a plurality of numbers respectively designating telephones (T1, T2, T3) connected to this residential gateway.

3. Location server (LS) for terminals connected to a residential gateway (RGW), for a telecommunication network supporting the SIP protocol, comprising means of receiving an identifier sent by an application server (AS), and means for then determining at least one terminal address (T1),
**characterized in that** said means for receiving an identifier are capable of receiving a residential gateway (RGW) address,
and **in that** said means for then determining at least one terminal address (T1) comprise:
- means for storing and associating:
- a gateway identifier (RGW),
- and a plurality of numbers respectively identifying telephones (T1, T2, T3) connected to this gateway,
- and means for sending (43) to this other device (AS) a plurality of numbers respectively designating telephones (T1, T2, T3) connected to this residential gateway (RGW), these numbers being read in the means for storing and associating.
